# EUROPEAN PATENT SPECIFICATION

(11) **EP 3 879 468 B1**
(45) Date of publication and mention of the grant of the patent: **16.10.2024**
(21) Application number: 20162179.4
(22) Date of filing: 10.03.2020
(51) Int. Cl.: G06Q 10/04, G06Q 10/06

(54) **METHOD AND SYSTEM FOR FORECASTING TERMINAL CONGESTION IN SEAPORTS**
VERFAHREN UND SYSTEM ZUR PROGNOSE DER ÜBERLASTUNG VON HÄFEN
PROCÉDÉ ET SYSTÈME POUR PRONONCER LA CONGESTION DE PORT

(43) Date of publication of application: 15.09.2021
(73) Proprietor: Jakota Cruise Systems GmbH, 18055 Rostock (DE)
(72) Inventor: HILGENFELD, Carsten, 18069 Rostock (DE)
(74) Representative: Seemann & Partner Patentanwälte mbB

(56) References cited:
- WO-A1-2019/190401
- US-A1- 2018 060 808
- US-A1- 2019 311 324

## Description

The invention concerns a method and a system for forecasting terminal congestion in seaports, in particular for a vessel of interest en route to one or more seaports of interest according to a given itinerary.

The invention addresses the problems of parties involved in the maritime supply chain, such as shipping companies or logistics service providers, to adjust the supply chain in response to changing circumstances. Shipping companies are interested in being informed as soon as possible of possible problems with regard to the handling of ships during stops in the future. They could then slow down their ships and save fuel, and inform their own customers and thus protect themselves against, e.g., fines for unannounced delays.

In practical operation, sea terminals regularly exhibit congestion. This means that they would have to handle more ships than there is capacity at the terminals. This leads to unplanned waiting times and delays in the logistics chain because the waiting ships cannot be processed. There is a variety of reasons that delay the handling of ships and lead to congestion. E.g., ships reach the terminal later than planned due to adverse weather conditions, or weather influences may delay the handling, such as the impracticability of the handling of cement during rain. There may be a lack of chassis in the ports, which prevents containers from being transported to and from the loading bridges. Strikes and industrial disputes may result in insufficient personnel to operate the terminal. The same applies to pilots, port police or vessel traffic services (VTS), which are marine traffic monitoring systems established by harbor or port authorities. A lack of personnel may also arise due to illness. In particular, many countries experience a shortage of truck or reach-stacker drivers on the labor market. This is a significant problem in port operations in all developed economies.

Other sources of processing difficulties leading to capacity problems include a lack of storage space for the goods due to delayed transport in the port hinterland, and an insufficient capacity expansion of the infrastructure. Disturbances during customs clearance and the threat of terrorism can hinder port operations for hours or days at any time. Technical defects in the crane systems that prevent loading and unloading are a frequent occurrence, as are technical defects on ships that prevent docking or undocking, e.g., defective loading hatches on RoRo ships.

This kind of problems is usually referred to as port congestion. Simply put, the port is not able to serve the ships waiting for congestion on time, resulting in unexpected delays in departure and onward travel. Port congestions are treated reactively on a spontaneous basis, as problems arise. This reactive approach sometimes leads to massive backlogs in the supply chain and thus to large inefficiencies.

US 2019/0311324 A1 discloses a method to automatically generate collaborative agreements between a liner shipping company and a marine container terminal operator. Multiple vessel arrival time windows are considered and the vessel speed and course are adjusted according to the optimal collaborative agreement.

It is the object of the present invention to enhance the efficiency of the sea based supply chain.

This object is solved by a method for forecasting terminal congestion in seaports, in particular for a vessel of interest en route to one or more seaports of interest according to a given itinerary, wherein, on the basis of vessel specific data including position, type and itinerary data, of a plurality of vessels, seaport specific data, a port call archive and a seaport routing simulation network, congestions of terminals in seaports are forecast, in particular for one or more terminals likely to be used by the vessel of interest in one or more of the seaports of interest within the vessel of interest's itinerary at an estimated time of arrival (ETA) of the vessel of interest at the forecast terminal, wherein lists of coming ports from the itineraries of the plurality of vessels are retrieved and for each of the vessels, in particular those vessels that have an itinerary including seaport(s) of interest, the list of coming ports is processed stepwise port by port from the current next port on, wherein, for each coming port in each vessel's itinerary, starting with the current next port, an ETA at the next port in line is calculated based on routing simulation network information and, based on data stored in the port call archive, one or more terminals in the next port in line is or are determined that is or are likely to be used by the vessel, wherein for the terminal most likely to be used or for each of the terminals likely to be used by the vessel, an estimated laytime (ELT) and an estimated time of departure (ETD) are calculated and, based on the estimated ETAs and ETDs of the plurality of vessels, an estimated occupancy of the terminal(s) over time is calculated and compared with the terminal's capacity, wherein a terminal congestion is forecast when at some time in the future the estimated occupancy of a terminal exceeds the terminal's capacity. The ELT is, for the purposes of the present application, the difference between the ETA and the ETD of a vessel at a terminal.

In the scope of the present invention, the terms "terminal" and "terminal congestion" encompasses extended terminals offering mooring space for several vessels as well as specialized individual berths in seaports and congestions at individual berths. The terminals for certain types of vessels, such as oil tankers or roll-on-roll-off vessels, having stationary loading and unloading facilities at the port, are called berths and encounter the same congestion problems as container terminals or other types of terminals.

Since terminal congestions are an important factor for delays along the supply chain, target groups for the inventive forecasting method include consignors, that is those who have the goods and merchandise transported by sea. They are very interested in an exact expected arrival time in order to adjust the logistic process accordingly. With the forecasting method according to the present invention, the congestion for several ship stops can be determined up to 14 days in the future. Furthermore, shipping companies are interested in the terminal congestion forecast in order to be informed at an early stage of possible problems with regard to the handling of the ships during stops in the future. They can then inform their own customers and thus protect themselves against, for example, fines for unannounced delays.

The inventive method rests on a synthesis of a range of components in order to make a data driven systemic forecast of congestions that is useful for short to medium term planning of parties involved in the maritime supply chain. The first such component is the transition in the level of detail from what in marketing is usually referred to as port congestion to a lower level of abstraction allowing for more detailed analysis and forecast. The invention's point of view is that such problems are conceptually terminal congestions. This concept may be easily understood by considering a car loading terminal and an adjacent special cargo terminal. A delay in unloading a wind turbine at the special cargo terminal will have no effect on the loading and unloading of the vehicle carrier at the car loading terminal. The congestion at the special cargo terminal can therefore be treated as a terminal congestion, not a port congestion. In contrast to previous solutions (port congestion), the view is thus broken down to the level of individual terminals. The inventive method can be applied to any terminal, such as roll-on-roll-off, container or bulk cargo terminals.

The second component contributing to the inventive method is the realization that, absent the knowledge of external future causes of processing delays at terminals, live data of worldwide marine traffic itself can be used as a data source for predicting terminal congestion in the future. Most seafaring vessels are equipped with AIS (AIS = "Automatic Identification System") transceivers that periodically send out position and other data signals that are received by shore based AIS base stations and satellites. The AIS signals typically include data on, among others, vessel identity, current position, course, destination (typically the next port), estimated time of arrival (ETA) at the destination, and on the type and size of the vessel. Since the amount of AIS signals sent out by all seafaring vessels worldwide per day is of the order of 3 billion (3.000.000.000) AIS signals, of which about 500 million are recorded for subsequent storage and availability, this task requires a massive data analysis operation. In order to expand the time horizon of the forecast over the next port and to put the pure AIS data into context, the method also employs itinerary data covering a series of port calls along a route according to the itinerary of a ship, seaport specific data used for correlating a specific vessel that is moored at a specific terminal with that terminal during a terminal call, and a routing simulation network for making a timing prediction along that route. Itinerary data are commercially available and contain the coming ports, the estimated days of arrival and departure and the association of the vessel with a carrier, e.g., a shipping company.

By having a port call archive, a vessel's itinerary can also be generated from analysing previous port call chains of the same vessel and judging whether they exhibit a common pattern.

The primary consideration of the AIS data of the vessels lays a viable groundwork for the forecast, since any delays or accelerations of individual vessels on their routes will change the timing of the vessel's port and terminal calls and therefore influence the prediction of terminal congestions. Furthermore, if vessels are moored at a certain terminal longer than anticipated, this fact will be represented in the position data of the vessel and thus factor in any external processing problems at that terminal.

The position and itinerary data of a single vessel do not have any predictive power. The forecast therefore involves the combination of data of the multitude of vessels that may simultaneously arrive at a terminal and thus may be part of terminal congestion, if more vessels call to moor at the terminal at a specific time than the terminal capacity allows for. The individual terminals in the seaports therefore are used as correlating instances between the routes of the different vessels. Since terminal congestion arises from the correlation of vessels calling the same terminal more or less simultaneously, the decision, which vessels will call which terminals in the future is crucial for the accuracy of the forecast. The answer to the question which terminal a ship will call in a given seaport is given by consulting the port call archive, which contains the relevant data in this respect, and which may be filled by analysing historic AIS data of this ship or similar ships calling the same seaport.

The inventive forecasting method thus enables participants in the maritime supply chain, such as shipping companies or logistics service providers, to adjust the chain before a terminal overload occurs. In contrast to previous solutions to port congestion, the analysis is broken down to the individual terminal level. The technical procedure can be applied to any terminal such as roll-on-roll-off, container or bulk cargo terminals. A permanently recurring calculation of the decisive influencing variables is realised. As with weather forecasts, the inventive method for forecasting terminal congestion is more accurate in the short run than in the long term. However, maritime traffic is less complex than weather, the global weather system and marine vessels usually adhere to predictable traffic patterns. Therefore, the predictive power of the forecast is quite good.

In embodiments, the vessel specific data comprise time tables with vessel itineraries and current AIS data of a plurality of vessels, the AIS data in particular comprising vessel identity information, vessel position information, vessel type information, vessel size information, vessel destination information and vessel ETA information, the port call archive comprises historic port call data based on the analysis of historic AIS data of a plurality of vessels that have in the past made port calls, in particular including at the seaports of interest, wherein the historic AIS data are used to identify the specific terminal or terminals, in particular including at the seaport(s) of interest, and the laytimes of the vessels at the specific terminal(s) and the seaport specific data comprise geographical information about terminals, berths and anchorage areas, terminal and berth type information and terminal capacity information regarding number of vessels and lengths of vessels.

A way of processing the vessel itineraries and filling the port call archive is to generate a zone event, in this case a last port call, from AIS position data and correlating these with the geographical extents of seaports. A port call is always in the past, a chain of port calls is called a port call history.

Seaport specific data about terminals, berths and anchorage areas may be transcribed from official port authority documents, and a specific zone type, terminal type or berth type assigned to each zone, terminal or berth. These can be container or bulk cargo terminals, for example.

In further embodiments, the routing simulation network comprises a node and edge network with nodes representing specific locations at sea, anchorage areas and seaports, and edges representing routes between neighbouring nodes, the edges containing information about distances, speed limitations and draught limitations, wherein in particular for each vessel that is currently in transit towards a next port and whose current position is known from its AIS data, the ETA at the next port is calculated by identifying and, in particular interpolating between, the closest three nodes of the routing simulation network and determining the fastest permitted route to the next port, wherein speed and draught limits are observed. The routing simulation network mesh may be viewed as static or quasi-static. A serviceable routing simulation network will have several tens of thousands of polygons that are defined as the polygonally shaped areas bounded by nodes and the edges connecting the neighbouring nodes. It is preferable if the mesh size of the network is smaller in heavily trafficked areas and bigger far out on the open sea, away from the heavily trafficked routes. The polygonal mesh can also be used to identify terminals, terminal zones and berths in and anchorage areas of seaports.

The continuous mapping of AIS signals onto the routing simulation network mesh also serves for measuring the laytime of the vessel in a resume of the mesh that might represent the terminal. If the vessel is moored during a terminal call, the AIS based position information may be filtered for GPS related drifts and disturbances, and for irregularities in the frequency with which AIS signals are sent by individual vessels, that is, the variations in time lapse between two successive signals.

In embodiments, the calculation of ETAs includes the time for transitioning from a seaport's anchorage area to the terminal most likely to be used. For example, the stretch between the anchorage area and the berth at the terminal can sometimes be many dozens of nautical miles long. This is particularly noticeable in Hamburg. In order to determine this, a check may be made to see whether the ship has come to a standstill in an anchorage area before a terminal call begins, but without having generated another port call or passed through a channel afterwards. If both can be denied, the time required by ships of the same type between the end of the zone call in the anchorage area and the beginning of the specific terminal can be determined and used in the calculation of the ETA.

In calculating the ETA at the next port of a vessel currently en route to the next port using the routing simulation network, the current cruising speed of the ship as well as speed limits on the expected trajectory are included in the calculation. This method is quite accurate, and frequently more accurate than the ETA given in the vessel's AIS signal. To improve the ETA, the ETA of a vessel at its next port, as calculated using the routing network, is compared in embodiments with a next port ETA contained in the vessel's AIS data, and the later of the two ETAs is used as next port ETA. Hence, if the calculated ETA is earlier than the vessel's ETA, the vessel's time is used. This is due to the fact that the vessel will in all likelihood reduce its cruising speed slightly before reaching the next port in order to have a time buffer before reaching its destination. The opposite case, in which the calculated ETA is later than the vessel's ETA, may be due to the fact that the nautical officers have not yet updated the message in the AIS or have not yet included a possible course adjustment due to, e.g., bad weather. In this case, the calculated ETA is used.

In further embodiments, when a vessel approaches the next port, it is checked whether the present occupation of the terminal most likely to be used allows for the vessel to make a terminal call at the terminal, otherwise, the ETA is set after the ETD of the next vessel estimated to depart from the terminal making sufficient space for the incoming vessel at the terminal. This is in fact a case of a terminal congestion having direct influence on the calculation of the ETA, thereby delaying the ETAs in the whole chain of coming ports of the vessel and thereby changing the occupancy of the terminals in that chain of coming ports. Since the terminal determined to be called by the vessel in the next port is already occupied by vessels identified as currently occupying the terminal, for which the positions, sizes and estimated laytimes are known, it can be directly determined whether the terminal has reached its capacity. If this is the case, it is checked whether the departure of the vessel moored at the terminal having the earliest estimated time of departure will open up sufficient mooring space for the incoming vessel. Adversely, if it is determined that there is sufficient mooring space available at the terminal, the ETA of the incoming vessel is not adjusted.

The determination of the terminal(s) in the next port in line likely to be used by the vessel may be based on the vessel's port call history in that seaport or, absent that vessel's port call history in that seaport, on port call histories of other vessels of the same type and similar size in that seaport, in particular of the same carrier, and the terminal with the most calls of vessels of the same type and similar size, in particular of the same carrier, is used. In other words, if a next port is determined for a ship, a check can be made with the port call archive to see at which terminals this ship has been in this seaport in the past. In case the port call history of a vessel for a specific port contains the call of two or more different terminals, the terminal called in the at least two most recent instances may be used, otherwise the terminal called at most often may be used, or, if the most recent terminal call at this seaport is longer ago than a predetermined length of time, the terminal which was called at last is used. Thereby, if different terminals in this seaport have been called at by this ship in the past, it can be checked whether the last call is different from the previous one. The terminal which, for example, was last called at least twice in a row will be chosen. This will rule out the possibility that the ship was transferred once to another terminal due to operational considerations in the port. If no terminal has ever been called twice or if these calls have been made a long time ago, the terminal that was called last will be chosen.

It is possible that the vessel wants to enter the next port for the first time. If this is the case, a first fallback level may be to check whether the carrier has had ships of the same type in the port in the past. If the answer is positive, the system may check whether these ships have a comparable length. If they have a comparable length, e.g., ±25 m, the terminal and the expected berthing time may be forecast in analogy to the cases in which the vessel has a port call history in that seaport. If no carrier data is available or if the carrier has not yet called at the next port, a search may be carried out for ships of the same type and comparable length. The terminal with the most terminal calls of the same type will be selected. The layover time may then be determined from the terminal calls of ships of the same type and similar length within the last three months.

It is then determined how long the berthing time at this terminal has been in the past. In embodiments, an estimated laytime of a vessel at a terminal is calculated from the port call archive by calculating a gliding average of the most recent terminal calls of the vessel at the same terminal, wherein in particular more recent terminal calls are given more weight than less recent terminal calls, or, if the vessel has not made previous terminal calls at the terminal, a laytime is estimated from laytimes of vessels of the same type and similar length within a predetermined time prior to the current time.

The calculation of the estimated laytime is made dependent on the direction of the vessel on its itinerary in embodiments. Ships in the Europe-Asia traffic usually stop in Singapore during the outward and return journey. The stop on the voyage to Europe is usually longer than on the voyage to China, as more goods (volume) are transported to Europe than in the opposite direction due to a trade imbalance. The direction of the traffic may determined on the basis of the last port information embedded in the AIS data.

Typically, only calls at the terminal most likely to be called at are used. However, for all terminals at which the vessel has called in the past, the expected laytime at the terminal may still be calculated. The value is not included for the later terminal congestion determination. However, if the vessel is placed on this terminal, the value is already available.

In further embodiments, terminals in seaports are monitored for current delays, wherein an event, in which the current laytime of a vessel currently stationed at a terminal significantly exceeds past laytimes at the same terminal, indicates a delay at the terminal, wherein the delay is carried over in the calculation of ETAs and ETDs along the line of this vessel's coming ports and, in particular, along the line of other vessel's coming ports that are in waiting for the terminal having the delay and/or that external information signalling potential delays at terminals are taken into account, in particular power outages, dock worker walkouts, damage to the technical infrastructure in need of fixing or weather-related influences. An examination of the laytimes allows to determine whether a ship has been at terminal unexpectedly long in relation to past lay times of the same and similar ships. In addition, it was also examined whether there are currently very few ships moored at the terminal. These data may serve as indicators for problems at the terminal.

In further embodiments, the routing simulation network and/or the port call archive contain information about seasonal or weather related variations in speeds and/or laytimes that are used in the forecast of ETAs and ETDs, and/or current sea weather conditions are implemented in the routing simulation network for rerouting vessels inside the simulation towards safe routes. Depending on the region, statistics are generated on the turnaround times. An example is Chinese New Year, on which virtually all Chinese ports are working with reduced handling times. Other seasonal influences include adverse weather conditions, e.g., during storm seasons, that delay processing in the ports in certain regions.

The capacity of a terminal is extracted in embodiments from the port call archive by using the maximum number of vessels at the terminal at the same time, and/or the maximum sum of the lengths of vessels at the terminal at the same time, because a substantial proportion of commercial ships are not restricted to an exact berth when berthing. In terms of observation they thus differ greatly from, for example, truck traffic. Ships have no restrictions in terms of form and type within their technical limits. In fact, when a ship is assigned a "berth", the terminal operator actually designates a place on the quay wall of, e.g., 500 metres to 800 metres (or several berths) where the ship is to moor. This means that the number of berths shown in the port plan is not suitable per se for determining how many ships can moor at the same time. Rather, the parameters that are decisive are the maximum number of ships that can dock at the terminal at any one time, and the maximum possible ship meters over all. In order to determine these two values, a check is made for the past to see how many ships have been at the terminal at the same time and also correspond to the type of ship, e.g., container ships at the terminal. It is also determined how high the total ship meters were. Each of these values is determined in, e.g., one-hour intervals for each terminal, from which limit values can be derived.

A further embodiment comprises determining on the basis of the AIS position as well as the dimensions of the hull whether an incoming vessel would still fit between currently lying vessels. This is possible because the exact position of the AIS antenna and the distance between bow and stern is stored in the AIS. With an appropriate buffer supplement, a further increase in accuracy can be achieved.

The seaport specific data are advantageously updated when terminals or seaports are added, expanded or restructured. This may then be adjusted immediately by a responsible person in a suitable editor for the zones of the routing simulation network mesh. A notice within the system can then inform the process chain that from the moment the zone extension is made, all previous boundaries will be treated with reduced reliability. All calculations are then performed on the revised polygon for the altered zone. After a few days, the system will have settled back in and will output the correct maximum ship meters or number of ships.

The problem underlying the present invention is also solved by a system for forecasting terminal congestion in seaports, in particular for a vessel of interest en route to one or more seaports of interest according to a given itinerary, comprising a computer with database means for receiving and storing vessel specific data including position, type and itinerary data, of a plurality of vessels, further comprising database means for storing seaport specific data and a port call archive, and simulating means for a seaport routing simulation network, comprising software means for implementing a method according to the invention as described above for forecasting, on the basis of the vessel specific data, seaport specific data, the port call archive and the seaport routing simulation network, congestions of terminals in seaports, in particular for one or more terminals likely to be used by the vessel of interest in one or more of the seaports of interest within the vessel of interest's itinerary at an ETA of the vessel of interest at the forecast terminal.

The problem underlying the present invention is furthermore solved by a software program means installed on a computer of an above-described system, which, when running on the computer, carries out the above-described method according to the present invention.

The system and the software program means carry out the inventive method and therefore embody its characteristics and advantages.

This method makes it possible to determine the load or overload for terminals up to about 14 days into the future. An extension to a longer period seems possible, but reduces the accuracy of the forecast. An analysis of contribution of each vessel to the load or overload of terminals, including berths, in seaports is performed. By linking the available information to a complex voyage planning, the voyage with docking and departure can be predicted for each vessel. The combination of many or all commercial vessels allows the determination of terminal congestion for all terminals worldwide.

This global approach eliminates the possibility of double counting of vessels. A ship can only contribute to the load at one terminal at any one time in the future. The determination of the load is carried out on a terminal level basis and not only at port level. This is made possible by including the polygons of the terminals and correlating the exact vessel and terminal locations. Another innovation is the determination of the capacity of the port with regard to maximum number of ships and berths.

The method and system of the present invention can be made available to end customers in the form of web applications, e.g., customers for this are, among others, shipping companies that need sources of information on the future utilisation of seaports, shippers who wish to be informed of a possible delay in the arrival of their goods and carriers who, due to delays in dispatching the ship, will receive their goods later and therefore have to reschedule the transport. Furthermore, the ships themselves may be advised to reduce speed and thus save fuel if a terminal congestion at the next port or one of the coming ports is forecast with a high likelihood at the ETA of the ship at the congested terminal.

In an exemplary embodiment, to forecast the future load, the next port of destination is determined from the ships' Automatic Identification System (AIS) and the expected terminal(s) is or are determined by historical calls of the exact ship, taking into account the calls of the shipping company. For each terminal in the considered ports the maximum number of ship length meters in combination with the maximum number of possible ships from historical calls is determined. The expected berthing time is extrapolated from historical calls of the specific ship. For this purpose, seasonal fluctuations in the expected laytime are taken into account. The expected arrival of the ships at the terminal and the expected length of stay at the terminal may be compared with the maximum capacity. This also determines when the overload will be reduced. A kind of electronic-dynamic Gantt chart, which is a tool for project/time management, is generated with permanent updating for the incoming ships, without the need for information from third parties such as shipping companies. The data output and transmission to the user is carried out via a program interface (API) and a screen output.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a simplified schematic of vessel routes in the Indian Ocean,
- Fig. 2: an overlay representation of a terminal in a seaport,
- Fig. 3: a schematic representation of a terminal,
- Fig. 4: a schematic of the method according to the invention and
- Fig. 5: a schematic of live terminal performance monitoring.

In the drawings, the same or similar types of elements or respectively corresponding parts are provided with the same reference numbers in order to prevent the item from needing to be reintroduced.

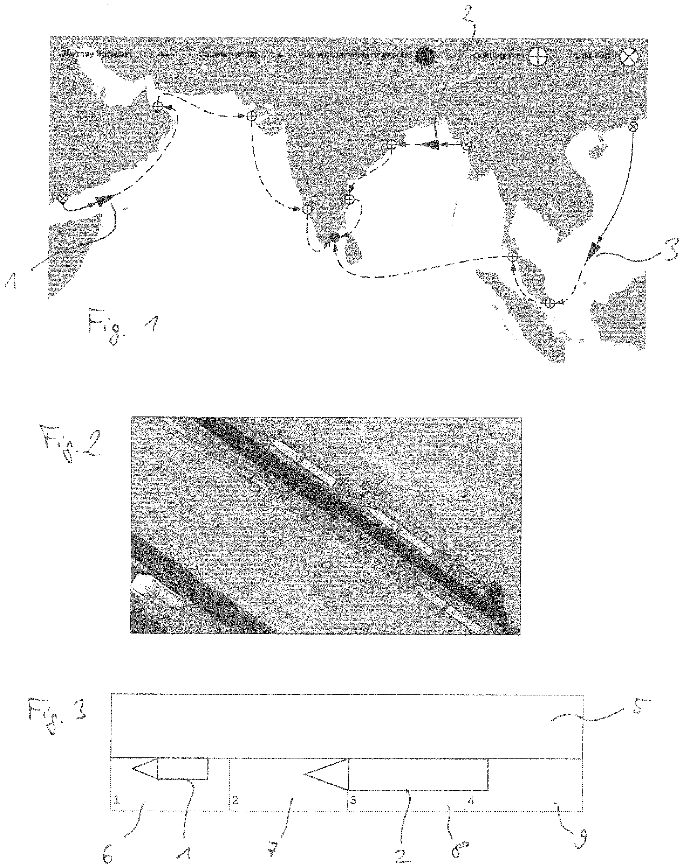

In Fig. 1, representative vessel routes in the Indian Ocean are depicted in a simplified manner. The three vessels 1, 2, 3 have departed from seaports (last ports, circles with X-type crosses) in Yemen, Myanmar and China, respectively, and heading for a seaport of interest (black circle) in India by route of several other seaports in Oman, India, Singapore and Thailand. The position of each vessel is marked by black triangles pointing in the direction of travel. Each of the three vessels is still several coming ports (circles with upright crosses) away from the seaport of interest in South India and is days or weeks away from calling that seaport. However, it becomes clear that the three vessels may arrive at the port at approximately the same time and may experience a delay because of limited processing capacity of the terminal that they will call at. The actual situation is much more complicated, since thousands of vessels navigate in the Indian Ocean, and thousands more worldwide, that might also cross roads with the vessels depicted in Fig. 1.

Fig. 2 shows an overlay representation of the terminal in a Seaport, with the dark space signaling water, framed on both sides by terminals at which several vessels are moored. In addition, a grid with zones at the terminals is displayed with dotted lines. Several of the vessels have a length that is longer than the length of one of the zones. An incoming vessel to call at one of the terminals will be given certain range at one of the terminals to moor at. By analyzing the AIS signals of the vessels which contain information about the ship position and the ship size, it is possible to determine at which terminal and at what position at the terminal a ship is moored.

This situation is depicted in Fig. 3 schematically. Two vessels 1 and 2 are moored at a terminal 5. Vessel 1 is moored in zone 6, whereas vessel 2 is moored in zone 8, but, because of its length, also covers parts of zone 7 and zone 9. The space between the bow of vessel 2 and the stern of vessel 1 may be large enough for another, smaller vessel, to moor. What becomes clear is that the zoning at the terminals is not strictly represented in the mooring behavior of the vessels.

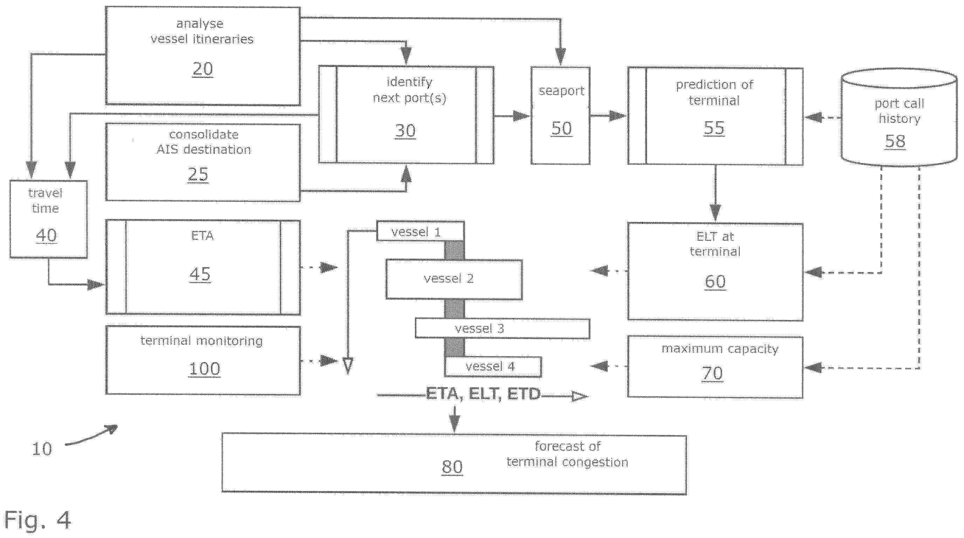

Fig. 4 depicts a schematic of the method 10 according to the invention. The method 10 includes analyzing vessel itineraries (step 20) of a plurality of vessels that are commercially available, or by analyzing port call histories of the vessels. Current AIS data of the vessels are received and consolidated in step 25 into a unified format, and from the vessel itineraries as well as the destination information from the consolidated AIS data of the vessels, a next port is identified for each vessel in step 30. The itinerary data can be used to identify the coming ports beyond the next port.

The first information directly necessary for forecasting terminal congestion is the estimated time of arrival (ETA) of a vessel at the next port. This is done by calculating the travel time to the next port in step 40 using a routing simulation network. That ETA can be compared with the next port ETA embedded in the vessel's AIS data. The later of the two ETAs is used in that case as the ETA 45.

Having established the ETA 45 of the vessels about to make port calls at the port(s) of interest, the next information necessary to predict terminal load is the estimated laytime 60 (ELT). The exact ELT is not available from AIS data or from the itineraries, which typically only list dates, not times. The estimate of the ELT 60 is dependent on the terminal likely to be called at. Therefore, the first action after the next port 50, and coming ports, has or have been established in step 30, is the prediction of the terminal likely to be called at in step 55. The prediction calls on a port call history from a port call archive 58 that includes prior port calls of the same vessel at the same port, or, absent prior port calls of that vessel, port calls of similar vessels, preferably of the same carrier. Usually, the vessel calls at the same terminal, but that can have changed in the past, and if a trend shows that most recently a specific different terminal has been called, the terminal indicated by the trend is used.

Again drawing from the port call history in a port call archive 58, an estimated laytime 60 is derived for the vessel. The most reliable data are those where prior port calls of the vessel have always been calls at the same terminal, but other port calls of the same vessel at other terminals of the port or of other similar vessels at the same terminal can be used, too.

Another factor in the determination of the terminal load is its maximum capacity 70. If the terminal had infinite capacity, the estimated time of departure (ETD) of the vessel would simply be the sum of the ETD and the ELT. However, any terminal has only a limited capacity, and if that capacity is exhausted, newly arriving vessels cannot be serviced until the next vessel currently moored at the terminal is processed and has departed, leaving enough terminal zone space for the arriving vessel. For this purpose, the port call history from the port call archive 58 is analysed for the maximum number of vessels moored at the terminal simultaneously, and, independently of the maximum number of vessel, the maximum of the sum of vessel lengths moored simultaneously at the terminal are determined and used as two parameters to judge whether the current and predicted future load in terms of number of vessels and sum of vessel lengths exceeds the terminal capacity. If that is the case, the ETA of the arriving vessel is postponed until after the next following ETD of a vessel moored at the terminal, whose departure would make enough space at the terminal for the arrivinig vessel.

The central part of Fig. 4 displays in a Gantt chart that four vessels have arrived or will arrive in succession at a terminal in a seaport. The horizontal axis of the Gantt chart depicts the passage of time, the vertical the lengths of ships. Vessel 2 is the longest of the four vessels, vessels 1, 3 and 4 are shorter and of comparable length. The terminal has a capacity of, e.g., three vessels to be serviced simultaneously. The ETA of the fourth vessel is before the ETD of any of the three other vessels that have arrived earlier. Therefore, a terminal congestion 80 is forecast, represented by the grey bar stretching in time (horizontal direction) from the ETA of vessel 4 to the ETD of vessel 1. Since vessel 4 cannot begin its terminal call until after vessel 1 has departed, its ETA is postponed until after the ETD of vessel 1.

A further analysis may reveal that the positions of vessels 1, 2 and 3 at the terminal are such that, allowing for a margin of safety, vessel 4 would fit into the space between two of the other vessels, this information would be used to update the terminal's capacity information.

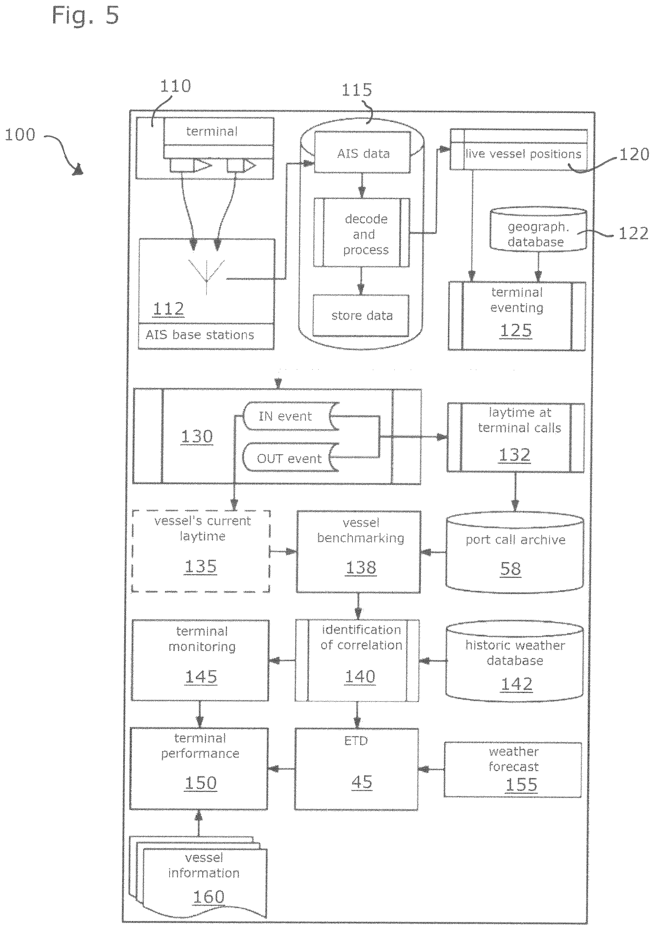

Another source of information influencing the ETAs of approaching vessels along the chain of coming ports is a terminal monitoring 100, which is in more detail described in Fig. 5. The terminal monitoring 100 serves to analyse current conditions at terminals in real time and thereby providing stronger footing in real time data for the forecast of terminal congestions. The calculations described above as well as the terminal monitoring 100 can be performed for the coming ports in addition to the next port.

An exemplary version of real time terminal monitoring 100 is depicted schematically in Fig. 5. The monitoring is based on the monitoring of vessels moored at a terminal in step 110, by analysing the AIS data that they send out and that are received in step 112 by AIS base stations located in the seaports. The AIS data are obtained, consolidated, that is decoded and processed, and stored in step 115, resulting in the extraction of live vessel positions 120, which may be filtered for GPS drifts or other disturbances that may mimic slight movement of a vessel that is actually moored and therefore does not move. A correlation of the live vessel positions with geographical information about terminal locations stored in a geographical database 122 in step 125 is used to generate terminal events in step 130, namely IN and OUT events marking the beginning and the end of a terminal call of a vessel at the terminal identified in step 125 before. The IN and OUT events of the terminal calls are used to calculated the laytimes of the terminal calls 132 as the difference between the time of departure and the time of arrival correlated with a terminal call. The relevant data of each port call are stored in the port call archive 58 which is also used in the terminal congestion forecast method 10 described in Fig. 4 above.

If a vessel is currently moored at a terminal during a port call, its current laytime is calculated in step 135 as the difference of the current time and the time of arrival, i.e., the IN event of the present port call. In a benchmarking step 138, the current laytime is compared with typical laytimes extracted from the port call archive 58. This comparison may provide a first indication of problems at the terminal, if the current laytime significantly exceeds the total laytimes of prior terminal calls of the same vessel, especially on the same route, and of similar vessels of the same type that previously have called at the same terminal. Similar vessels may be defined as vessels of the same type having similar length, e.g., ±25 m, or all vessels with length greater than 100 m, by way of example only.

The result of the benchmarking is further processed with the input of historic weather data from a historic weather database 142, which can provide a correlation of current laytimes with historic weather patterns by means of, e.g., statistical-heuristic methods in step 140, in which prior assumptions are put in, such as annual holidays or seasonal weather patterns that guide the correlation. The result of this step 140 is on the one hand used to monitor the state of the terminal in step 150, and on the other hand to output an ETD 45 adjusted for seasonal influences, into which current weather forecasts 155 can also be factored in.

With additional vessel information 160 such as the vessel's container capacity, the performance 150 of the terminal can be established from the terminal monitoring 145 and the adjusted ETDs 45. The terminal monitoring 100 is carried out for one or for multiple terminals (including berths) and one or multiple seaports. The terminal monitoring 100 and the inventive method 10 are constantly updated and serve to provide terminal congestion forecasts up to 14 days. Terminal congestion may be forecast, e.g., for 6 h intervals into the future for use by interested parties, and updated regularly, e.g., hourly.

The inventive method and system according to the invention are capable of making terminal congestion forecasts for any terminal in any seaport and thus making the prediction for the seaports on the route of a specific vessel means identifying the coming ports of that vessel.

A downscaled version of the method having equally good predictive power but needing greatly reduced calculating power starts with the identification of the coming ports of a specific vessel of interest and identifies other vessels of the same type that are calling or will call at the coming ports in the vessel of interest's itinerary in the near future, e.g., within the 14 day time horizon, according to their itineraries, and restricting the calculations of the ETAs and ELTs as well as the terminal monitoring to those vessels.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 1 - 4: vessels
- 5: terminal
- 6-9: zones at terminal
- 10: method for forecasting terminal congestion
- 20: analyse vessel itineraries
- 25: consolidate AIS destination
- 30: identify next port(s)
- 40: calculate travel time
- 45: estimated time of arrival (ETA) at next port(s)
- 50: identify seaport
- 55: prediction of terminal to be called at
- 58: port call archive
- 60: estimated lay time (ELT) at terminal
- 70: maximum capacity of terminal
- 80: forecast of terminal congestion
- 100: terminal monitoring
- 110: vessels moored at terminal send AIS signals
- 112: AIS signals are received by base station in seaport
- 115: AIS data are consolidated and stored
- 120: live vessel positions are extracted
- 122: geographical database of terminals
- 125: vessel positions are correlated with geographical data
- 130: terminal IN and OUT events are recorded
- 132: laytime at terminal calls
- 135: a vessel's current laytime is calculated
- 138: the laytime is compared with previous laytimes
- 140: correlations are identified
- 142: historic weather database
- 145: the state of the terminal is monitored
- 150: the current terminal performance is established
- 155: weather forecast
- 160: vessel information
- AIS: automatic information system
- ETA: estimated time of arrival
- ELT: estimated laytime
- ETD: estimated time of departure

## Claims

1. Method for forecasting terminal congestion in seaports, in particular for a vessel (1, 2, 3, 4) of interest en route to one or more seaports of interest according to a given itinerary, wherein, on the basis of vessel specific data including position, type and itinerary data, of a plurality of vessels (1, 2, 3, 4), seaport specific data, a port call archive (58) and a seaport routing simulation network, congestions of terminals (5) in seaports are forecast, in particular for one or more terminals (5) likely to be used by the vessel (1, 2, 3, 4) of interest in one or more of the seaports of interest within the vessel (1, 2, 3, 4) of interest's itinerary at an ETA of the vessel (1, 2, 3, 4) of interest at the forecast terminal (5), wherein lists of coming ports from the itineraries of the plurality of vessels (1, 2, 3, 4) are retrieved and for each of the vessels (1, 2, 3, 4), in particular those vessels that have an itinerary including seaport(s) of interest, the list of coming ports is processed stepwise port by port from the current next port on, wherein, for each coming port in each vessel's itinerary, starting with the current next port, an ETA (45) at the next port in line is calculated based on routing simulation network information and, based on data stored in the port call archive (58), one or more terminals (5) in the next port in line is or are determined that is or are likely to be used by the vessel (1, 2, 3, 4), wherein for the terminal (5) most likely to be used or for each of the terminals (5) likely to be used by the vessel (1, 2, 3, 4), an estimated laytime (ELT) (60) and an estimated time of departure (ETD) are calculated and, based on the estimated ETAs (45) and ETDs of the plurality of vessels (1, 2, 3, 4), an estimated occupancy of the terminal(s) (5) over time is calculated and compared with the terminal's capacity, wherein a terminal congestion is forecast when at some time in the future the estimated occupancy of a terminal (5) exceeds the terminal's capacity.

2. The method according to claim 1, **characterized in that**
- the vessel specific data comprise time tables with vessel itineraries and current AIS data of a plurality of vessels (1, 2, 3, 4), the AIS data in particular comprising vessel identity information, vessel position information, vessel type information, vessel size information, vessel destination information and vessel ETA information,
- the port call archive (58) comprises historic port call data based on the analysis of historic AIS data of a plurality of vessels (1, 2, 3, 4) that have in the past made port calls, in particular including at the seaports of interest, wherein the historic AIS data are used to identify the specific terminal (5) or terminals (5), in particular including at the seaport(s) of interest, and the laytimes of the vessels (1, 2, 3, 4) at the specific terminal(s) (5) and
- the seaport specific data comprise geographical information about terminals, berths and anchorage areas, terminal and berth type information and terminal capacity information regarding number of vessels and lengths of vessels.

3. The method according to claim 1 or 2, **characterized in that** the routing simulation network comprises a node and edge network with nodes representing specific locations at sea, anchorage areas and seaports, and edges representing routes between neighbouring nodes, the edges containing information about distances, speed limitations and draught limitations, wherein in particular for each vessel (1, 2, 3, 4) that is currently in transit towards a next port and whose current position is known from its AIS data, the ETA (45) at the next port is calculated by identifying and, in particular interpolating between, the closest three nodes of the routing simulation network and determining the fastest permitted route to the next port, wherein speed and draught limits are observed.

4. The method according to one of claims 1 to 3, **characterized in that** the calculation of ETAs (45) includes the time for transitioning from a seaport's anchorage area to the terminal (5) most likely to be used.

5. The method according to one of claims 1 to 4, **characterized in that** an ETA of a vessel (1, 2, 3, 4) at its next port, as calculated using the routing network, is compared with a next port ETA contained in the vessel's AIS data, and the later of the two ETAs is used as next port ETA (45).

6. The method according to one of claims 1 to 5, **characterized in that**, when a vessel (1, 2, 3, 4) approaches the next port, it is checked whether the present occupation of the terminal (5) most likely to be used allows for the vessel (1, 2, 3, 4) to make a terminal call at the terminal (5), otherwise, the ETA (45) is set after the ETD of the next vessel (1, 2, 3, 4) estimated to depart from the terminal (5) making sufficient space for the incoming vessel (1, 2, 3, 4) at the terminal (5).

7. The method according to one of claims 1 to 6, **characterized in that** the determination of the terminal(s) (5) in the next port in line likely to be used by the vessel (1, 2, 3, 4) is based on the vessel's port call history (58) **in that** seaport or, absent that vessel's port call history (58) **in that** seaport, on port call histories (58) of other vessels (1, 2, 3, 4) of the same type and similar size **in that** seaport, in particular of the same carrier, and the terminal (5) with the most calls of vessels (1, 2, 3, 4) of the same type and similar size, in particular of the same carrier, is used.

8. The method according to one of claims 1 to 7, **characterized in that** in case the port call history (58) of a vessel (1, 2, 3, 4) for a specific port contains the call of two or more different terminals (5), the terminal (5) called at in the at least two most recent instances is used, otherwise the terminal (5) called at most often is used, or, if the most recent terminal call at this seaport is longer ago than a predetermined length of time, the terminal (5) which was called at last is used.

9. The method according to one of claims 1 to 8, **characterized in that** an estimated laytime of a vessel (1, 2, 3, 4) at a terminal (5) is calculated from the port call archive (58) by calculating a gliding average of the most recent terminal calls of the vessel (1, 2, 3, 4) at the same terminal (5), wherein in particular more recent terminal calls are given more weight than less recent terminal calls, or, if the vessel (1, 2, 3, 4) has not made previous terminal calls at the terminal (5), a laytime (60) is estimated from laytimes of vessels (1, 2, 3, 4) of the same type and similar length within a predetermined time prior to the current time, wherein in particular the calculation of the estimated laytime (60) is made dependent on the direction of the vessel (1, 2, 3, 4) on its itinerary.

10. The method according to one of claims 1 to 9, **characterized in that** terminals (5) in seaports are monitored for current delays, wherein an event, in which the current laytime of a vessel (1, 2, 3, 4) currently stationed at a terminal (5) significantly exceeds past laytimes at the same terminal (5), indicates a delay at the terminal (5), wherein the delay is carried over in the calculation of ETAs (45) and ETDs along the line of this vessel's coming ports and, in particular, along the line of other vessel's coming ports that are in waiting for the terminal (5) having the delay and/or that external information signalling potential delays at terminals (5) are taken into account, in particular power outages, dock worker walkouts, damage to the technical infrastructure in need of fixing or weather-related influences.

11. The method according to one of claims 1 to 10, **characterized in that** the routing simulation network and/or the port call archive 58) contain information about seasonal or weather related variations in speeds and/or laytimes that are used in the forecast of ETAs (45) and ETDs, and/or that current sea weather conditions are implemented in the routing simulation network for rerouting vessels (1, 2, 3, 4) inside the simulation towards safe routes.

12. The method according to one of claims 1 to 11, **characterized in that** the capacity of a terminal (5) is extracted from the port call archive (58) by using the maximum number of vessels (1, 2, 3, 4) at the terminal (5) at the same time, and/or the maximum sum of the lengths of vessels (1, 2, 3, 4) at the terminal (5) at the same time.

13. The method according to one of claims 1 to 12, **characterized in that** it is determined on the basis of the AIS position as well as the dimensions of the hull whether an incoming vessel (1, 2, 3, 4) would still fit between currently lying vessels (1, 2, 3, 4).

14. The method according to one of claims 1 to 13, **characterized in that** the seaport specific data are updated when terminals (5) or seaports are added, expanded or restructured.

15. System for forecasting terminal congestion in seaports, in particular for a vessel (1, 2, 3, 4) of interest en route to one or more seaports of interest according to a given itinerary, comprising a computer with database means for receiving and storing vessel specific data including position, type and itinerary data, of a plurality of vessels (1, 2, 3, 4), further comprising database means for storing seaport specific data and a port call archive (58), and simulating means for a seaport routing simulation network, comprising software means for implementing a method according to one of claims 1 to 14 for forecasting, on the basis of the vessel specific data, seaport specific data, the port call archive (58) and the seaport routing simulation network, congestions of terminals (5) in seaports, in particular for one or more terminals (5) likely to be used by the vessel (1, 2, 3, 4) of interest in one or more of the seaports of interest within the vessel (1, 2, 3, 4) of interest's itinerary at an ETA of the vessel (1, 2, 3, 4) of interest at the forecast terminal (5).

16. Software program means installed on a computer of a system according to claim 15, which, when running on the computer, carries out the above-described method according to one of claims 1 to 14.

## Patentansprüche

1. Verfahren zur Vorhersage von Terminalüberlastungen in Seehäfen, insbesondere für ein Schiff (1, 2, 3, 4) von Interesse auf dem Weg zu einem oder mehreren Seehäfen von Interesse gemäß einer gegebenen Route, wobei auf der Grundlage von schiffspezifischen Daten, umfassend Position, Typ und Routendaten einer Mehrzahl von Schiffen (1, 2, 3, 4), seehafenspezifischen Daten, einem Hafenanlaufarchiv (58) und einem Routingsimulationsnetzwerk für Seehäfen, Überlastungen von Terminals (5) in Seehäfen vorhergesagt werden, insbesondere für einen oder mehrere Terminals (5), die von dem Schiff (1, 2, 3, 4) von Interesse in einem oder mehreren der Seehäfen von Interesse innerhalb der Route des Schiffs (1, 2, 3, 4) von Interesse zu einer ETA des Schiffs (1, 2, 3, 4) von Interesse an dem vorhergesagten Terminal (5) am wahrscheinlichsten benutzt werden, wobei Listen kommender Häfen aus den Routen der Mehrzahl von Schiffen (1, 2, 3, 4) abgerufen werden und für jedes der Schiffe (1, 2, 3, 4), insbesondere jene Schiffe, die eine Route haben, welche einen Seehafen (Seehäfen) von Interesse umfasst, die Liste kommender Häfen schrittweise Hafen für Hafen von dem aktuellen nächsten Hafen an verarbeitet wird, wobei für jeden kommenden Hafen auf der Route jedes Schiffs, beginnend mit dem aktuellen nächsten Hafen, eine ETA (45) an dem nächsten Hafen in der Reihe basierend auf Routingsimulationsnetzwerkinformationen berechnet wird, und basierend auf Daten, die in dem Hafenanlaufarchiv (58) gespeichert sind, ein oder mehrere Terminals (5) in dem nächsten Hafen in der Reihe bestimmt werden, die am wahrscheinlichsten von dem Schiff (1, 2, 3, 4) benutzt werden, wobei für den am wahrscheinlichsten benutzten Terminal (5) und für jeden der am wahrscheinlichsten benutzten Terminals (5) von dem Schiff (1, 2, 3, 4) eine voraussichtliche Liegezeit (ELT) (60) und eine voraussichtliche Abfahrtszeit (ETD) berechnet werden, und basierend auf den voraussichtlichen ETAs (45) und ETDs der Mehrzahl von Schiffen (1, 2, 3, 4) eine voraussichtliche Auslastung des (der) Terminals (5) im Laufe der Zeit berechnet wird und mit der Kapazität des Terminals verglichen wird, wobei eine Überlastung vorhergesagt wird, wenn zu einem Zeitpunkt in der Zukunft die voraussichtliche Auslastung eines Terminals (5) die Kapazität des Terminals übersteigt.

2. Verfahren nach Anspruch 1, **dadurch gekennzeichnet, dass**
- die schiffspezifischen Daten Zeitpläne mit Schiffsrouten und aktuellen AIS-Daten einer Mehrzahl von Schiffen (1, 2, 3, 4) umfassen, wobei die AIS-Daten insbesondere Schiffsidentitätsinformationen, Schiffspositionsinformationen, Schiffstypinformationen, Schiffsgrößeninformationen, Schiffszielinformationen und ETA-Informationen zum Schiff umfassen,
- das Hafenanlaufarchiv (58) historische Hafenanlaufdaten umfasst, basierend auf der Analyse historischer AIS-Daten einer Mehrzahl von Schiffen (1, 2, 3, 4), die in der Vergangenheit Hafenanläufe, insbesondere in den Seehäfen von Interesse gemacht haben, wobei die historischen AIS-Daten verwendet werden, um den spezifischen Terminal (5) oder die spezifischen Terminals (5), insbesondere in dem Seehafen (den Seehäfen) von Interesse, und die Liegezeiten der Schiffe (1, 2, 3, 4) an dem (den) spezifischen Terminal(s) (5) zu identifizieren, und
- die seehafenspezifischen Daten geografische Informationen, Liege- und Ankerplätze, Terminal- und Liegeplatztypinformationen und Terminalkapazitätsinformationen hinsichtlich der Anzahl von Schiffen und Längen von Schiffen umfassen.

3. Verfahren nach Anspruch 1 oder 2, **dadurch gekennzeichnet, dass** das Routingsimulationsnetzwerk ein Knoten- und Edge-Netzwerk umfasst, mit Knoten, die spezifische Orte auf See, Ankerplätze und Seehäfen darstellen, und Edges, die Routen zwischen benachbarten Knoten darstellen, wobei die Edges Informationen über Distanzen, Geschwindigkeitsbeschränkungen und Tiefgangsbeschränkungen enthalten, wobei insbesondere für jedes Schiff (1, 2, 3, 4), das aktuell auf dem Transportweg zu einem nächsten Hafen ist und dessen aktuelle Position aus seinen AIS-Daten bekannt ist, die ETA (45) an dem nächsten Hafen berechnet wird, indem die nächstliegenden drei Knoten des Routingsimulationsnetzwerks identifiziert werden, insbesondere zwischen diesen interpoliert wird und die schnellste zugelassene Route zu dem nächsten Hafen bestimmt wird, wobei Geschwindigkeitsund Tiefgangsbeschränkungen eingehalten werden.

4. Verfahren nach einem der Ansprüche 1 bis 3, **dadurch gekennzeichnet, dass** die Berechnung von ETAs (45) die Zeit für den Übergang von einem Seehafenankerbereich zu dem am wahrscheinlichsten benutzten Terminal (5) umfasst.

5. Verfahren nach einem der Ansprüche 1 bis 4, **dadurch gekennzeichnet, dass** eine ETA eines Schiffs (1, 2, 3, 4) an seinem nächsten Hafen, wie unter Verwendung des Routingnetzwerks berechnet, verglichen wird mit einer ETA eines nächsten Hafens, die in den AIS-Daten des Schiffs enthalten ist, und die spätere der zwei ETAs als ETA (45) des nächsten Hafens verwendet wird.

6. Verfahren nach einem der Ansprüche 1 bis 5, **dadurch gekennzeichnet, dass**, wenn sich ein Schiff (1, 2, 3, 4) dem nächsten Hafen nähert, geprüft wird, ob es die gegenwärtige Auslastung des am wahrscheinlichsten benutzten Terminals (5) für das Schiff (1, 2, 3, 4) zulässt, einen Hafenanlauf an dem Terminal (5) zu machen, ansonsten die ETA (45) auf nach ETD des nächsten Schiffs (1, 2, 3, 4), das voraussichtlich aus dem Terminal (5) abfährt, gesetzt wird, wodurch ausreichend Platz für das hereinkommende Schiff (1, 2, 3, 4) an dem Terminal (5) gemacht wird.

7. Verfahren nach einem der Ansprüche 1 bis 6, **dadurch gekennzeichnet, dass** die Bestimmung des (der) Terminals (5) in dem nächsten Hafen in der Reihe, der (die) von dem Schiff (1, 2, 3, 4) am wahrscheinlichsten benutzt wird (werden), auf der Hafenanlaufhistorie (58) des Schiffs in jenem Seehafen, oder mangels jener Hafenanlaufhistorie (58) des Schiffs in jenem Seehafen, auf Hafenanlaufhistorien (58) anderer Schiffe (1, 2, 3, 4) des gleichen Typs und ähnlicher Größe in jenem Hafen, insbesondere des gleichen Trägers, basiert, und das Terminal (5) mit den meisten Anläufen von Schiffen (1, 2, 3, 4) des gleichen Typs und ähnlicher Größe, insbesondere des gleichen Trägers, benutzt wird.

8. Verfahren nach einem der Ansprüche 1 bis 7, **dadurch gekennzeichnet, dass**, falls die Hafenanlaufhistorie (58) eines Schiffs (1, 2, 3, 4) für einen spezifischen Hafen den Anlauf von zwei oder mehreren verschiedenen Terminals (5) enthält, der Terminal (5) benutzt wird, der in den mindestens zwei jüngsten Malen angelaufen wurde, ansonsten der Terminal (5) benutzt wird, der am häufigsten angelaufen wurde, oder, wenn der jüngste Terminalanlauf an diesem Seehafen länger als eine vorherbestimmte Zeitspanne zurückliegt, der Terminal (5) benutzt wird, der zuletzt angelaufen wurde.

9. Verfahren nach einem der Ansprüche 1 bis 8, **dadurch gekennzeichnet, dass** eine voraussichtliche Liegezeit eines Schiffs (1, 2, 3, 4) an einem Terminal (5) aus dem Hafenanlaufarchiv (58) berechnet wird, indem ein gleitender Durchschnitt der jüngsten Terminalanläufe des Schiffs (1, 2, 3, 4) an dem gleichen Terminal (5) berechnet wird, wobei insbesondere jüngeren Terminalanläufen mehr Gewicht verliehen wird als älteren Terminalanläufen, oder, falls das Schiff (1, 2, 3, 4) keine vorherigen Terminalanläufe an dem Terminal (5) gemacht hat, eine Liegezeit (60) aus Liegezeiten von Schiffen (1, 2, 3, 4) des gleichen Typs und ähnlicher Länge innerhalb einer vorherbestimmten Zeit vor der aktuellen Zeit geschätzt wird, wobei insbesondere die Berechnung der voraussichtlichen Liegezeit (60) von der Richtung des Schiffs (1, 2, 3, 4) auf seiner Route abhängig gemacht wird.

10. Verfahren nach einem der Ansprüche 1 bis 9, **dadurch gekennzeichnet, dass** Terminals (5) in Seehäfen auf aktuelle Verzögerungen überwacht werden, wobei ein Ereignis, bei dem die aktuelle Liegezeit eines Schiffs (1, 2, 3, 4), das aktuell an einem Terminal (5) stationiert ist, vergangene Liegezeiten an dem gleichen Terminal (5) deutlich übersteigt, eine Verzögerung an dem Terminal (5) anzeigt, wobei die Verzögerung in die Berechnung von ETAs (45) und ETDs entlang der Reihe von kommenden Häfen dieses Schiffs und insbesondere entlang der Reihe von kommenden Häfen anderer Schiffe, die auf den Terminal (5) warten, der die Verzögerung aufweist, einfließt, und/oder dass externe Informationen, die potenzielle Verzögerungen an Terminals (5) signalisieren, berücksichtigt werden, insbesondere Stromausfälle, Streiks von Hafenarbeitern, Schäden an der technischen Infrastruktur, die repariert werden müssen, oder wetterbedingte Einflüsse.

11. Verfahren nach einem der Ansprüche 1 bis 10, **dadurch gekennzeichnet, dass** das Routingsimulationsnetzwerk und/oder das Hafenanlaufarchiv (58) Informationen über saisonale oder wetterbedingte Abweichungen bei Geschwindigkeiten und/oder Liegezeiten enthalten, die bei der Vorhersage von ETAs (45) und ETDs verwendet werden, und/oder dass aktuelle Seewetterbedingungen in das Routingsimulationsnetzwerk implementiert werden, um Schiffe (1, 2, 3, 4) innerhalb der Simulation auf sichere Routen umzuleiten.

12. Verfahren nach einem der Ansprüche 1 bis 11, **dadurch gekennzeichnet, dass** die Kapazität eines Terminals (5) aus dem Hafenanlaufarchiv (58) extrahiert wird, indem die maximale Anzahl von Schiffen (1, 2, 3, 4) an dem Terminal (5) zur gleichen Zeit und/oder die maximale Summe der Längen von Schiffen (1, 2, 3, 4) an dem Terminal (5) zur gleichen Zeit verwendet werden.

13. Verfahren nach einem der Ansprüche 1 bis 12, **dadurch gekennzeichnet, dass** basierend auf der AIS-Position sowie den Abmessungen des Rumpfes bestimmt wird, ob ein hereinkommendes Schiff (1, 2, 3, 4) noch zwischen aktuell liegende Schiffe (1, 2, 3, 4) passen würde.

14. Verfahren nach einem der Ansprüche 1 bis 13, **dadurch gekennzeichnet, dass** die seehafenspezifischen Daten aktualisiert werden, wenn Terminals (5) oder Seehäfen hinzugefügt, erweitert oder umgestaltet werden.

15. System zur Vorhersage von Terminalüberlastungen in Seehäfen, insbesondere für ein Schiff (1, 2, 3, 4) von Interesse auf dem Weg zu einem oder mehreren Seehäfen von Interesse gemäß einer gegebenen Route, umfassend einen Computer mit Datenbankmitteln zum Empfangen und Speichern von schiffspezifischen Daten, umfassend Position, Typ und Routendaten einer Mehrzahl von Schiffen (1, 2, 3, 4), weiter umfassend Datenbankmittel zum Speichern von seehafenspezifischen Daten und eines Hafenanlaufarchivs (58) und Simulationsmittel für ein Routingsimulationsnetzwerk für Seehäfen, umfassend Softwaremittel zum Implementieren eines Verfahrens nach einem der Ansprüche 1 bis 14, um basierend auf den schiffspezifischen Daten, seehafenspezifischen Daten und dem Hafenanlaufarchiv (58) und dem Routingsimulationsnetzwerk für Seehäfen Überlastungen von Terminals (5) in Seehäfen, insbesondere für einen oder mehrere Terminals (5), die von dem Schiff (1, 2, 3, 4) von Interesse in einem oder mehreren der Seehäfen von Interesse innerhalb der Route des Schiffs (1, 2, 3, 4) von Interesse zu einer ETA des Schiffs (1, 2, 3, 4) von Interesse an dem vorhergesagten Terminal (5) am wahrscheinlichsten benutzt werden, vorherzusagen.

16. Softwareprogrammmittel, installiert auf einem Computer eines Systems nach Anspruch 15, das, wenn es auf dem Computer läuft, das oben beschriebene Verfahren nach einem der Ansprüche 1 bis 14 ausführt.

## Revendications

1. Procédé de prévision de la congestion d'un terminal dans des ports maritimes, notamment pour un navire (1, 2, 3, 4) d'intérêt en route vers un ou plusieurs ports maritimes d'intérêt selon un itinéraire donné, dans lequel, sur la base de données spécifiques au navire incluant des données de position, de type et d'itinéraire, d'une pluralité de navires (1, 2, 3, 4), de données spécifiques à un port maritime, d'archives d'escales (58) et d'un réseau de simulation d'itinéraire de port maritime, des congestions de terminaux (5) dans des ports maritimes sont prévues, notamment pour un ou plusieurs terminaux (5) susceptibles d'être utilisés par le navire (1, 2, 3, 4) d'intérêt dans un ou plusieurs des ports maritimes d'intérêt au sein de l'itinéraire du navire (1, 2, 3, 4) d'intérêt au moment d'une ETA (« *Estimated time of Arrivai* » en anglais, Heure Estimée d'Arrivée) du navire (1, 2, 3, 4) d'intérêt au terminal (5) prévu, des listes de ports à venir provenant des itinéraires de la pluralité de navires (1, 2, 3, 4) étant récupérées et pour chacun des navires (1, 2, 3, 4), en particulier ceux qui ont un itinéraire incluant un ou plusieurs ports maritimes d'intérêt, la liste des ports à venir étant traitée étape par étape port par port à partir du prochain port actuel, une ETA (45) au prochain port en ligne étant calculée sur la base d'informations de réseau de simulation d'itinéraire pour chaque port à venir dans l'itinéraire de chaque navire, en commençant par le port suivant actuel, et, sur la base de données stockées dans les archives d'escales (58), un ou plusieurs terminaux (5) dans le port suivant en ligne étant déterminés, qui sont susceptibles d'être utilisés par le navire (1, 2, 3, 4) ; pour le terminal (5) le plus susceptible d'être utilisé ou pour chacun des terminaux (5) susceptibles d'être utilisés par le navire (1, 2, 3, 4), un temps d'escale estimé (ELT) (60) et une heure de départ estimée (ETD) sont calculés et, sur la base des ETA estimées (45) et les ETD de la pluralité de navires (1, 2, 3, 4), une occupation estimée du ou des terminaux (5) au fil du temps étant calculée et comparée à la capacité du terminal, de sorte qu'une congestion du terminal est prévue lorsqu'à un moment dans le futur, l'occupation estimée d'un terminal (5) dépasse la capacité du terminal.

2. Le procédé selon la revendication 1, **caractérisé en ce que**
- les données spécifiques au navire comprennent des horaires avec des itinéraires de navire et des données AIS actuelles d'une pluralité de navires (1, 2, 3, 4), les données AIS comprenant en particulier des informations d'identité du navire, des informations de position du navire, des informations sur le type de navire, des informations sur la taille du navire, des informations sur la destination du navire et des informations sur l'ETA du navire,
- les archives d'escales (58) comprennent des données d'escale historiques basées sur l'analyse de données AIS historiques d'une pluralité de navires (1, 2, 3, 4) qui ont effectué des escales dans le passé, notamment dans les ports maritimes d'intérêt, les données AIS historiques étant utilisées pour identifier le ou les terminaux spécifiques (5), notamment ceux du ou des ports maritimes d'intérêt, et les temps d'escale des navires (1, 2, 3, 4). au(x) terminal(aux) spécifique(s) (5) et
- les données spécifiques aux ports maritimes comprennent des informations géographiques sur les terminaux, les postes d'amarrage et les zones de mouillage, des informations sur le terminal et le type de poste d'amarrage et des informations sur la capacité du terminal concernant le nombre de navires et la longueur des navires.

3. Le procédé selon la revendication 1 ou la revendication 2, **caractérisé en ce que** le réseau de simulation d'itinéraire comprend un réseau de noeuds et de bords avec des noeuds représentant des emplacements spécifiques en mer, des zones de mouillage et des ports maritimes, et des bords représentant des itinéraires entre noeuds voisins, les bords contenant des informations concernant les distances, les limitations de vitesse et les limitations de tirant d'eau ; pour chaque navire (1, 2, 3, 4), notamment, qui est actuellement en transit vers un prochain port et dont la position actuelle est connue à partir de ses données AIS, l'ETA (45) au prochain port est calculée en identifiant les trois noeuds les plus proches du réseau de simulation de routage, et notamment en interpolant entre ces trois noeuds, et en déterminant l'itinéraire autorisé le plus rapide vers le prochain port, les limites de vitesse et de tirant d'eau étant respectées.

4. Le procédé selon l'une des revendications 1 à 3, **caractérisé en ce que** le calcul des ETA (45) inclut le temps pour passer de la zone de mouillage d'un port maritime au terminal (5) le plus susceptible d'être utilisé.

5. Le procédé selon l'une des revendications 1 à 4, **caractérisé en ce qu'**une ETA d'un navire (1, 2, 3, 4) à son prochain port, telle que calculée en utilisant le réseau de routage, est comparée avec une ETA de prochain port contenue dans les données AIS du navire, et la dernière des deux ETA est utilisée comme étant l'ETA (45) de prochain port.

6. Le procédé selon l'une des revendications 1 à 5, **caractérisé en ce que**, lorsqu'un navire (1, 2, 3, 4) s'approche du port suivant, il est vérifié si l'occupation actuelle du terminal (5) le plus susceptible d'être utilisé permet au navire (1, 2, 3, 4) d'effectuer une escale au terminal (5), sinon l'ETA (45) est définie après l'ETD du prochain navire (1, 2, 3, 4) supposé partir du terminal (5), laissant suffisamment d'espace pour le navire entrant (1, 2, 3, 4) au terminal (5).

7. Le procédé selon l'une des revendications 1 à 6, **caractérisé en ce que** la détermination du ou des terminaux (5) dans le port suivant en ligne susceptible d'être utilisé par le navire (1, 2, 3, 4) est basée sur l'historique des escales du navire (58) dans ce port maritime ou, en l'absence de l'historique des escales du navire (58) dans ce port maritime, sur les historiques des escales (58) d'autres navires (1, 2, 3, 4) du même type et de taille similaire dans ce port maritime, notamment du même transporteur, et le terminal (5) ayant le plus d'escales de navires (1, 2, 3, 4) de même type et de taille similaire, en particulier du même transporteur, est utilisé.

8. Le procédé selon l'une des revendications 1 à 7, **caractérisé en ce que** dans le cas où l'historique des escales (58) d'un navire (1, 2, 3, 4) pour un port spécifique contient l'escale de deux ou plusieurs terminaux différents (5), le terminal (5) auquel il a été fait escale au cours des au moins deux instances les plus récentes est utilisé, sinon le terminal (5) auquel il a été fait escale le plus souvent est utilisé, ou, si l'escale la plus récente du terminal dans ce port maritime remonte à plus d'une durée prédéterminée, le terminal (5) auquel il a été fait escale en dernier lieu est utilisé.

9. Le procédé selon l'une des revendications 1 à 8, **caractérisé en ce qu'**un temps d'escale estimé d'un navire (1, 2, 3, 4) à un terminal (5) est calculé à partir de l'archive d'escale (58) en calculant une moyenne glissante des escales les plus récentes du navire (1, 2, 3, 4) au même terminal (5) ; en particulier, les escales les plus récentes au terminal reçoivent une pondération supérieure aux escales moins récentes, ou, si le navire (1, 2, 3, 4) n'a pas effectué d'escales précédentes au terminal (5), un temps d'escale (60) est estimé à partir des temps d'escale de navires (1, 2, 3, 4) du même type et de longueur similaire dans un temps prédéterminé antérieur à l'heure actuelle ; le calcul du temps d'escale estimé (60) est notamment rendu dépendant de la direction du navire (1, 2, 3, 4) sur son itinéraire.

10. Le procédé selon l'une des revendications 1 à 9, **caractérisé en ce que** des terminaux (5) dans les ports maritimes sont surveillés pour détecter des retards actuels, un événement selon lequel le temps d'escale actuel d'un navire (1, 2, 3, 4) actuellement stationné dans un terminal (5) dépasse significativement les temps d'escale passés au même terminal (5), indique un retard au niveau du terminal (5), le retard étant reporté dans le calcul des ETA (45) et des ETD le long de la ligne des ports d'arrivée de ce navire et, en particulier, le long de la ligne des ports d'arrivée d'autres navires qui attendent le terminal (5) ayant le retard, et/ou ces informations externes signalant d'éventuels retards au niveau de terminaux (5) sont prises en compte, notamment les pannes d'alimentation, les débrayages de dockers, les dommages aux infrastructures techniques nécessitant des réparations ou des influences météorologiques.

11. Le procédé selon l'une des revendications 1 à 10, **caractérisé en ce que** le réseau de simulation d'itinéraire et/ou les archives d'escales 58) contiennent des informations sur les variations saisonnières ou météorologiques dans les vitesses et/ou les escales qui sont utilisées dans la prévision d'ETA (45) et d'ETD, et/ou **en ce que** les conditions météorologiques maritimes actuelles sont mises en oeuvre dans le réseau de simulation d'itinéraire pour réacheminer les navires (1, 2, 3, 4) à l'intérieur de la simulation vers des itinéraires sûrs.

12. Le procédé selon l'une des revendications 1 à 11, **caractérisé en ce que** la capacité d'un terminal (5) est extraite de l'archive des escales (58) en utilisant le nombre maximum de navires (1, 2, 3, 4) au terminal (5) en même temps, et/ou la somme maximale des longueurs des navires (1, 2, 3, 4) au terminal (5) en même temps.

13. Le procédé selon l'une des revendications 1 à 12, **caractérisé en ce qu'**il est déterminé sur la base de la position AIS ainsi que des dimensions de la coque si un navire entrant (1, 2, 3, 4) s'insérerait encore entre les vaisseaux actuellement immobilisés (1, 2, 3, 4).

14. Le procédé selon l'une des revendications 1 à 13, **caractérisé en ce que** les données spécifiques aux ports maritimes sont mises à jour lorsque des terminaux (5) ou des ports maritimes sont ajoutés, agrandis ou restructurés.

15. Système de prévision de la congestion de terminaux dans des ports maritimes, notamment pour un navire (1, 2, 3, 4) d'intérêt en route vers un ou plusieurs ports maritimes d'intérêt selon un itinéraire donné, comprenant un ordinateur avec des moyens de base de données pour recevoir et stocker des données spécifiques au navire, incluant des données de position, de type et d'itinéraire, d'une pluralité de navires (1, 2, 3, 4), comprenant en outre des moyens de base de données pour stocker des données spécifiques aux ports maritimes et une archive d'escale (58), et un moyen de simulation pour un réseau de simulation d'itinéraire de ports, comprenant des moyens logiciels pour mettre en oeuvre un procédé selon l'une des revendications 1 à 14 pour prévoir, sur la base des données spécifiques au navire, des données spécifiques aux ports maritimes, des archives d'escales (58) et du réseau de simulation d'itinéraire de ports, des congestions de terminaux (5) dans des ports maritimes, notamment pour un ou plusieurs terminaux (5) susceptibles d'être utilisés par le navire (1, 2, 3, 4) d'intérêt dans un ou plusieurs des ports maritimes d'intérêt au sein de l'itinéraire du navire (1, 2, 3, 4) d'intérêt à une ETA du navire (1, 2, 3, 4) d'intérêt au terminal (5) prévu.

16. Moyen programme logiciel installé sur un ordinateur d'un système selon la revendication 15, qui, lorsqu'il est exécuté sur l'ordinateur, met en oeuvre le procédé décrit ci-dessus selon l'une des revendications 1 à 14.
